# EUROPÄISCHE PATENTANMELDUNG

(11) **EP 2 335 897 A1**
(43) Veröffentlichungstag der Anmeldung: **22.06.2011**
(21) Anmeldenummer: 10193574.0
(22) Anmeldetag: 03.12.2010
(51) Int. Cl.: B28D 7/02

(54) **Vorrichtung zur Aufbereitung einer kühl- und Spülflüssigkeit und Steuerungsverfahren für eine Aufbereitungsvorrichtung**

(30) Priorität: 18.12.2009 DE 102009054963
(71) Anmelder: HILTI Aktiengesellschaft, 9494 Schaan (LI)
(72) Erfinder: Holzmeier, Georg, 86836, Untermeitingen (DE); Schuster, Marc, 76131, Karlsruhe (DE); Burkhard, Andreas, 86830, Schwabmünchen (DE)

(57) **Zusammenfassung**

Vorrichtung (2) zur Aufbereitung einer Kühl- und Spülflüssigkeit aus einer Schmutzflüssigkeit (15) mit einem ersten Behälter (20), der die Schmutzflüssigkeit (15) sammelt, einem zweiten Behälter (21), der mit einer Abführleitung (38) für die aufbereitete Kühl- und Spülflüssigkeit (36) verbunden ist, einem Druckschalter (41), der in der Abführleitung (38) zur Druckmessung angeordnet ist, und einer Steuereinrichtung (40) zum Umschalten der Aufbereitungsvorrichtung (2) zwischen einem ersten Betriebsmodus und mindestens einem weiteren Betriebsmodus, wobei die Aufbereitungsvorrichtung (2) in Abhängigkeit von dem in der Abführleitung (38) gemessenen Druck zwischen dem ersten und dem mindestens einen weiteren Betriebsmodus umschaltbar ist.

## Beschreibung

Die vorliegende Erfindung betrifft eine Vorrichtung zur Aufbereitung einer Kühl- und Spülflüssigkeit gemäß dem Oberbegriff des Anspruchs 1 sowie ein Verfahren zur Steuerung einer Aufbereitungsvorrichtung gemäß dem Oberbegriff des Anspruchs 2.

Bei der abrasiv abtragenden Bearbeitung mit Diamantwerkzeugen, beispielsweise in Form von Diamantbohrkronen oder Diamantsägen, ist es erforderlich, das Diamantwerkzeug im Bereich der Bearbeitungsstelle zu kühlen, um eine Beschädigung des Diamantwerkzeuges durch eine Überhitzung zu vermeiden. Die Schneidsegmente der Diamantwerkzeuge werden während des Bearbeitungsvorgangs mittels einer Kühlflüssigkeit gekühlt, um den Bearbeitungsvorgang zu unterstützen und die Lebensdauer der Schneidsegmente zu erhöhen. Die Flüssigkeit dient außerdem dazu, die von dem Diamantwerkzeug abgetragenen Feststoffe von der Bearbeitungsstelle zu entfernen. Die zugeführte Flüssigkeit wird als Kühl- und Spülflüssigkeit und die mit Feststoffen versetzte Flüssigkeit als Schmutzflüssigkeit bezeichnet.

EP 0 941 828 B1 offenbart eine bekannte Aufbereitungsvorrichtung zum Aufbereiten einer Kühl- und Spülflüssigkeit aus einer Schmutzflüssigkeit und zum Zuführen der aufbereiteten Kühl- und Spülflüssigkeit zu einem Werkzeuggerät, beispielsweise einem Kernbohrgerät. Die Aufbereitungsvorrichtung umfasst zwei luft- und flüssigkeitsdicht abgeschlossene Behälter. Im Betrieb sind der erste Behälter mittels einer Unterdruckeinrichtung als Unterdruckbehälter und der zweite Behälter mittels einer Überdruckeinrichtung als Überdruckbehälter ausgebildet. Der Unterdruckbehälter ist über eine Verbindungsleitung mit dem Überdruckbehälter verbunden. Am Deckel des Überdruckbehälters befindet sich ein Filterelement. Aufgrund des Überdrucks strömt die vorgereinigte Schmutzflüssigkeit in das Innere des Filterelementes. In der vorgereinigten Schmutzflüssigkeit vorhandene Feststoffe bleiben im Filterelement hängen. Im Inneren des Filterelementes sammelt sich recycelte Kühl- und Spülflüssigkeit, die dem Werkzeuggerät zugeführt werden kann. Die recycelte Kühl- und Spülflüssigkeit strömt aufgrund des Überdruckes über eine Versorgungsleitung zum Werkzeuggerät.

Da die bekannte Aufbereitungsvorrichtung die Absaugung der Schmutzflüssigkeit und die Zufuhr der Kühl- und Spülflüssigkeit zu dem Werkzeuggerät in einem geschlossenen Kreislauf durchführt, ist es erforderlich, die Steuerung der Aufbereitungsvorrichtung an das Werkzeuggerät anzupassen.

Diese Steuerung erfolgt bei einer weiteren bekannten Aufbereitungsvorrichtung über den Einschaltstrom des verbundenen Werkzeuggerätes. Um den Einschaltstrom des Werkzeuggerätes erfassen zu können, weist das Werkzeuggerät einen Schutzkontaktstecker auf, der an der bekannten Aufbereitungsvorrichtung eingesteckt wird und die elektrische Versorgung des Werkzeuggerätes sicherstellt.

Ein Nachteil der bekannten Aufbereitungsvorrichtungen besteht darin, dass eine automatische Steuerung der Aufbereitungsvorrichtung über den Einschaltstrom eines verbundenen Werkzeuggerätes nicht immer möglich ist. Werkzeuggeräte, die beispielsweise in Form von Diamantkernbohrgeräten ausgebildet sind, sind in verschiedene Leistungsklassen, die unterschiedliche Anforderungen an die elektrische Versorgung der Werkzeuggeräte stellen, unterteilt und weisen unterschiedliche elektrische Anschlüsse und Leitungen auf.

Die Aufgabe der vorliegenden Erfindung besteht darin, eine Aufbereitungsvorrichtung sowie ein Steuerungsverfahren für eine Aufbereitungsvorrichtung der eingangs genannten Art dahingehend weiterzuentwickeln, dass eine automatische Steuerung der Aufbereitungsvorrichtung für verschiedene akku- und/oder netzbetriebene Werkzeuggeräte möglich ist.

Diese Aufgabe wird bei der eingangs genannten Aufbereitungsvorrichtung erfindungsgemäß durch die Merkmale des unabhängigen Anspruchs gelöst. Vorteilhafte Ausgestaltungen ergeben sich aus den abhängigen Ansprüchen.

Es wird eine Vorrichtung zur Aufbereitung einer Kühl- und Spülflüssigkeit aus einer Schmutzflüssigkeit mit einem ersten Behälter, der die Schmutzflüssigkeit sammelt, einem zweiten Behälter, der mit einer Abführleitung für die aufbereitete Kühl- und Spülflüssigkeit verbunden ist, einem Druckschalter, der in der Abführleitung zur Druckmessung angeordnet ist, und einer Steuereinrichtung zum Umschalten der Aufbereitungsvorrichtung zwischen einem ersten Betriebsmodus und mindestens einem weiteren Betriebsmodus vorgeschlagen.

Erfindungsgemäß ist die Aufbereitungsvorrichtung in Abhängigkeit von dem in der Abführleitung gemessenen Druck zwischen dem ersten und dem mindestens einen weiteren Betriebsmodus umschaltbar.

Außerdem wird ein Verfahren zur Steuerung einer Aufbereitungsvorrichtung vorgeschlagen, bei dem der Druckschalter den Druck in der Abführleitung misst und bei Überschreiten eines voreingestellte, oberen Druckwertes oder bei Unterschreiten eines voreingestellten, unteren Druckwertes einen Schaltimpuls an die Steuereinrichtung übermittelt.

Bevorzugt schaltet die Steuereinrichtung die Aufbereitungsvorrichtung bei Überschreiten des oberen Druckwertes in einen Stand-by-Modus und bei Unterschreiten des unteren Druckwertes in einen Bearbeitungsmodus um.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

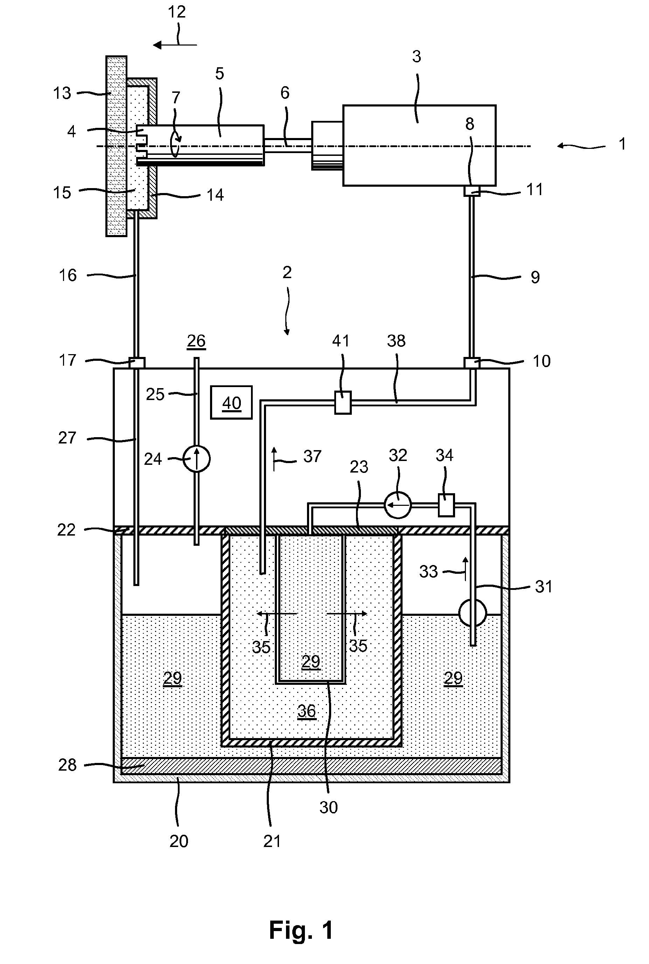

- Fig. 1: ein Kernbohrgerät mit einer erfindungsgemäßen Aufbereitungsvorrichtung zur Aufbereitung einer Kühl- und Spülflüssigkeit.

Das in **Fig. 1** gezeigte Werkzeuggerät ist als Kernbohrgerät **1** ausgebildet und mit einer erfindungsgemäßen Aufbereitungsvorrichtung **2** zur Aufbereitung einer Kühl- und Spülflüssigkeit verbunden.

Das Kernbohrgerät 1 umfasst eine Maschineneinheit **3,** die eine mit Schneidsegmenten **4** besetzte Bohrkrone **5** um eine Drehachse **6** in eine Drehrichtung **7** antreibt. Die Kühl- und Spülflüssigkeit wird über eine Einlassöffnung **8** der Maschineneinheit **3** zugeführt. Die Einlassöffnung 8 ist über eine Versorgungsleitung **9** mit einem Ausgangsstutzen **10** der Aufbereitungsvorrichtung **2** verbunden. Alternativ kann die Kühl- und Spülflüssigkeit einem Saug- bzw. Spülkopf zugeführt werden, der in Strömungsrichtung hinter der Maschineneinheit 3 angeordnet ist.

Über eine Reguliereinrichtung **11,** die mit der Einlassöffnung 8 der Maschineneinheit 3 verbunden ist und die von einem Bediener manuell bedient wird, ist der Durchfluss der Kühlund Spülflüssigkeit in die Maschineneinheit 3 einstellbar. Dabei ist die Reguliereinrichtung 11 als Absperreinrichtung ausgebildet und zwischen einer offenen Stellung, in der die Kühl- und Spülflüssigkeit in die Maschineneinheit 3 strömen kann, und einer geschlossenen Stellung, in der der Zufluss der Kühl- und Spülflüssigkeit zur Maschineneinheit 3 unterbrochen ist, verstellbar. Alternativ kann die Reguliereinrichtung 11 eine diskrete oder kontinuierliche Einstellung des Durchflusses der Kühl- und Spülflüssigkeit zwischen 0 % (geschlossene Stellung) und 100 % (offene Stellung) ermöglichen.

Im Bohrbetrieb, d.h. während die Bohrkrone 5 um die Drehachse 6 angetrieben wird und die Schneidsegmente 4 in einer Bohrrichtung 12 in einen zu bearbeitenden Untergrund 13 eindringen, wird die Bohrkrone 5 mittels der Kühl- und Spülflüssigkeit gespült und im Bereich der Bearbeitungsstelle gekühlt. Auf dem zu bearbeitenden Untergrund 13 ist eine Auffangeinrichtung **14** angeordnet, die die Bearbeitungsstelle umgibt und eine erwärmte und mit Feststoffen versetzte Kühl- und Spülflüssigkeit, die als Schmutzflüssigkeit **15** bezeichnet wird, auffängt. Die Auffangeinrichtung 14 ist über eine Absaugleitung **16** an einen Eingangsstutzen **17** der Aufbereitungsvorrichtung 2 angeschlossen.

Die Aufbereitungsvorrichtung 2 umfasst einen ersten und zweiten Behälter **20, 21**. Um die Aufbereitungsvorrichtung 2 kompakt auszubilden, ist der zweite Behälter 21 im ersten Behälter 20 angeordnet und beide Behälter 20, 21 sind jeweils über einen Deckel **22, 23** luft- und flüssigkeitsdicht abgeschlossen. Alternativ können die beiden Behälter 20, 21 nebeneinander angeordnet sein.

Der erste Behälter 20 wirkt im Bohrbetrieb mit einer Absaugeinrichtung **24,** die die Schmutzflüssigkeit 15 aus der Auffangeinrichtung 14 in den ersten Behälter 20 befördert, zusammen. Die Absaugeinrichtung 24 als beispielsweise als Einrichtung zur Erzeugung eines Unterdrucks, die im Folgenden als Unterdruckeinrichtung bezeichnet wird, ausgebildet und der erste Behälter 20 wird auch als Unterdruckbehälter bezeichnet. Die Unterdruckeinrichtung 24 ist in einer Saugleitung **25** angeordnet, die mit einem Ende in den Unterdruckbehälter 20 mündet und mit einem anderen Ende an eine Atmosphäre **26** angeschlossen ist. Durch den Unterdruck, der im Unterdruckbehälter 20 gegenüber der Auffangeinrichtung 14 herrscht, wird die Schmutzflüssigkeit 15 über die Absaugleitung 16 und eine Zuführleitung **27,** die mit einem Ende an den Eingangsstutzen 17 der Aufbereitungsvorrichtung 2 angeschlossen ist und mit einem anderen Ende in den Unterdruckbehälter 20 mündet, in den Unterdruckbehälter 20 befördert.

Der Unterdruckbehälter 20 dient zusätzlich zur Vorreinigung der Schmutzflüssigkeit 15. Durch die Schwerkraft setzen sich Feststoffe, die durch das abgetragene Material des Untergrundes 13 in der Schmutzflüssigkeit 15 vorhanden sind, am Boden des Unterdruckbehälters 20 als abgesetzte Feststoffe **28** ab. Oberhalb der abgesetzten Feststoffe 28 befindet sich eine vorgereinigte Schmutzflüssigkeit **29.**

Im zweiten Behälter 21 ist ein Filterelement **30** angeordnet, das über eine Verbindungsleitung **31** mit dem Unterdruckbehälter 20 verbunden ist. Damit die durch die Schwerkraft bereits abgesetzten Feststoffe 28 nicht in das Filterelement 30 gelangen, ist der in den Unterdruckbehälter 20 ragende Teil der Verbindungsleitung 31 als vom Boden des Unterdruckbehälters 20 beabstandete Steigleitung ausgebildet. In der Verbindungsleitung 31 ist eine Einrichtung zur Erzeugung eines Überdruckes **32**, die im Folgenden als Überdruckeinrichtung bezeichnet wird und beispielsweise als Druckpumpe ausgebildet ist, angeordnet. Die Überdruckeinrichtung 32 erzeugt beispielsweise einen Überdruck, der zwischen 1 und 6 bar beträgt. Der zweite Behälter 21 wird auch als Überdruckbehälter bezeichnet.

Durch den Überdruck strömt die vorgereinigte Schmutzflüssigkeit 29 über die Verbindungsleitung 31 aus dem Unterdruckbehälter 20 in das Filterelement 30. In der Verbindungsleitung 31 befindet sich in einer Strömungsrichtung **33** vor der Überdruckeinrichtung 32 ein Rückschlagventil **34**, das verhindert, dass die vorgereinigte Schmutzflüssigkeit 29 in den Unterdruckbehälter 20 zurückströmt.

Aufgrund des Überdruckes in dem Filterelement 30 strömt die vorgereinigte Schmutzflüssigkeit 29 durch das Filterelement 30 in einer Strömungsrichtung 35 in den Überdruckbehälter 21. Feststoffe, die in der vorgereinigten Schmutzflüssigkeit 29 enthalten sind, lagern sich aufgrund der Schwerkraft am Boden des Filterelementes 30 ab oder bleiben im Filterelement 30 hängen. Im Überdruckbehälter 21 sammelt sich recycelte Kühl- und Spülflüssigkeit **36**, die dem Kernbohrgerät 1 zugeführt werden kann, so dass der Kreislauf geschlossen ist. Die recycelte Kühl- und Spülflüssigkeit **36** strömt aufgrund der Druckdifferenz in einer Strömungsrichtung **37** über eine Abführleitung **38**, die mit einem Ende in den Überdruckbehälter 21 mündet und mit einem anderen Ende an den Ausgangsstutzen 10 der Aufbereitungsvorrichtung 2 angeschlossen ist, und die Versorgungsleitung 9 in das Kernbohrgerät 1.

Die erfindungsgemäße Aufbereitungsvorrichtung 2 kann in verschiedenen Betriebsmodi betrieben werden. Dazu gehören unter anderem ein Bearbeitungsmodus, bei dem das Kernbohrgerät 1 mit recycelter Kühl- und Spülflüssigkeit 36 versorgt und die Schmutzflüssigkeit 15 gleichzeitig an der Auffangeinrichtung 14 abgesaugt wird sowie ein Stand-by-Modus, bei dem die Aufbereitungsvorrichtung 2 in einem betriebsbereiten Zustand gehalten wird.

Die Aufbereitungsvorrichtung 2 weist außerdem eine Steuereinrichtung **40** und einen Druckschalter **41** auf. Die Steuereinrichtung 40 dient unter anderem zur Steuerung der Absaugeinrichtung 24 und der Überdruckeinrichtung 32. Der Druckschalter 41 misst den Druck in der Abführleitung 38 und gibt der Steuereinrichtung 40 bei Überschreiten eines voreingestellten, oberen Druckwertes oder bei Unterschreiten eines voreingestellten, unteren Druckwertes einen Schaltimpuls.

Der Bediener stellt den Durchfluss der Kühl- und Spülflüssigkeit 36 zum Kernbohrgerät 1 über die Reguliereinrichtung 11 ein. Im Bearbeitungsmodus ist die Reguliereinrichtung 11 in der offenen Stellung und die Kühl- und Spülflüssigkeit 36 strömt über die Einlassöffnung 8 in die Maschineneinheit 3. Unterbricht der Bediener den Bearbeitungsvorgang, schließt er die Reguliereinrichtung 11. Durch die geschlossene Reguliereinrichtung 11 wird die Zufuhr der Kühl- und Spülflüssigkeit 36 zur Maschineneinheit 3 unterbrochen. In der Abführleitung 38 baut sich ein Überdruck auf, da die Überdruckeinrichtung 32 noch aktiv ist.

Überschreitet der vom Druckschalter 41 gemessene Druck den voreingestellten, oberen Druckwert für ein bestimmtes Zeitintervall, beispielsweise für 5 Sekunden, schaltet die Steuereinrichtung 40 die Aufbereitungsvorrichtung 2 für eine unbestimmte Zeit in einen Stand-by-Modus. Der Stand-by-Modus zeichnet sich dadurch aus, dass die Aufbereitungsvorrichtung 2 in einem betriebsbereiten Zustand gehalten wird. Der Druckschalter 41 misst in regelmäßigen Zeitintervallen den Druck in der Abführleitung 38. Unterschreitet der gemessene Druck einen voreingestellten Wert, gibt der Druckschalter 41 der Steuereinrichtung 40 einen Schaltimpuls. Die Steuereinrichtung 40 aktiviert die Überdruckeinrichtung 32, bis der Druck den gewünschten Wert erreicht. Nach Erreichen des gewünschten Drucks deaktiviert die Steuereinrichtung 40 die Überdruckeinrichtung 32.

Die Aufbereitungsvorrichtung 2 bleibt solange im Stand-by-Modus, bis der Druckschalter 41 in der Abführleitung 38 eine Druckänderung misst. Beabsichtigt der Bediener den Bearbeitungsvorgang fortzusetzen, öffnet er die Reguliereinrichtung 11. Dies führt zu einem Druckabfall in der Abführleitung 38. Der Druckschalter 41 misst den Druck in der Abführleitung 38 und gibt der Steuereinrichtung 40 bei Unterschreiten des voreingestellten, unteren Druckwertes einen Schaltimpuls. Die Steuereinrichtung 40 schaltet die Aufbereitungsvorrichtung 2 aus dem Stand-by-Modus in den Bearbeitungsmodus um. Dazu gehört, dass die Überdruckeinrichtung 32 und die Absaugeinrichtung 24 aktiviert werden, so dass die Schmutzflüssigkeit 15 von der Absaugeinrichtung 24 über die Absaugleitung 16 und die Zuführleitung 27 in den ersten Behälter 20 gesaugt wird und die aufbereitete Kühl- und Spülflüssigkeit 36 über die Abführleitung 38 und die Versorgungsleitung 9 der Maschineneinheit 3 zugeführt wird.

## Patentansprüche

1. Vorrichtung (2) zur Aufbereitung einer Kühl- und Spülflüssigkeit aus einer Schmutzflüssigkeit (15) mit einem ersten Behälter (20), der die Schmutzflüssigkeit (15) sammelt, einem zweiten Behälter (21), der mit einer Abführleitung (38) für die aufbereitete Kühl- und Spülflüssigkeit (36) verbunden ist, einem Druckschalter (41), der in der Abführleitung (38) zur Druckmessung angeordnet ist, und einer Steuereinrichtung (40) zum Umschalten der Aufbereitungsvorrichtung (2) zwischen einem ersten Betriebsmodus und mindestens einem weiteren Betriebsmodus,
**dadurch gekennzeichnet, dass** die Aufbereitungsvorrichtung (2) in Abhängigkeit von dem in der Abführleitung (38) gemessenen Druck zwischen dem ersten und dem mindestens einen weiteren Betriebsmodus umschaltbar ist.

2. Verfahren zur Steuerung einer Aufbereitungsvorrichtung (2), bei dem ein Druckschalter (41) den Druck in einer Abführleitung (38) misst und bei Überschreiten eines oberen Druckwertes oder bei Unterschreiten eines unteren Druckwertes einen Schaltimpuls an eine Steuereinrichtung (40) übermittelt.

3. Steuerungsverfahren nach Anspruch 2, **dadurch gekennzeichnet, dass** die Steuereinrichtung (40) die Aufbereitungsvorrichtung (2) bei Überschreiten des oberen Druckwertes in einen Stand-by-Modus umschaltet.

4. Steuerungsverfahren nach Anspruch 2, **dadurch gekennzeichnet, dass** die Steuereinrichtung (40) die Aufbereitungsvorrichtung (2) bei Unterschreiten des unteren Druckwertes in einen Bearbeitungsmodus umschaltet.
